(19)

Europäisches
Patentamt
European
Patent Office
Office européen
des brevets

(11)  **EP 2 808 829 A1**

(12)  **EUROPEAN PATENT APPLICATION**

(43) Date of publication:
**03.12.2014 Bulletin 2014/49**

(51) Int Cl.:
**G06K 9/62** (2006.01)

(21) Application number: **13169527.2**

(22) Date of filing: **28.05.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **VRIJE UNIVERSITEIT BRUSSEL
1050 Brussel (BE)**
• **iMinds VZW
9050 Gent (BE)**

(72) Inventors:
• **Barri, Adriaan
2820 Bonheiden (BE)**
• **Dooms, Ann
9470 Denderleeuw (BE)**
• **Jansen, Bart
1050 Brussel (BE)**
• **Schelkens, Peter
1050 Brussel (BE)**

(74) Representative: **Van Bladel, Marc
DenK iP bvba
Hundelgemsesteenweg 1114
9820 Merelbeke (BE)**

(54)  **Method and apparatus for predicting the perceptual quality of a signal**

(57)    There is provided a method for predicting the perceptual quality of a signal (310). The method comprises *inter alia* subjecting the signal (310) to a plurality of objective quality measurement algorithms, and forming a plurality of normalized weighted sums (330a-e) based on the output (320a-c) of the objective quality measurement algorithms. The weights used to form the normalized weighted sums (330a-e) are such that each of the normalized weighted sums (330a-e) gives an optimal prediction of the perceptual quality of signals for an associated target value. The normalized weighted sums (330a-e) are then weighted based on their distances to their associated target values. The method provides an improved prediction accuracy of the perceptual quality.

Fig. 3

EP 2 808 829 A1

**Description**

Field of the invention

The present invention relates to a method for improved prediction of the perceptual quality of a signal and an apparatus adapted for using said method.

Background of the invention

Rapid advances in information technology have accelerated the need of efficient quality monitoring in streaming media applications. The distribution of the multimedia content through information channels with a limited bandwidth typically requires a reduction of the data exchanged. However, this may lead to for instance compression or transmission errors, which decrease the perceptual quality of the multimedia content. In order to meet the demands of the end user, these quality degradations should be measured and controlled by a quality monitoring system.

A first type of quality monitoring involves subjective quality assessment, in which a representative group of test subjects is asked to rate the perceptual quality of compressed, distorted or in other way altered information signals. Subjective quality assessment, when conducted properly, is however time consuming, expensive, and unsuitable for real-time quality monitoring. In order to circumvent these drawbacks, automatic quality monitoring systems are needed that do not rely on subjective experiments. To this end, objective quality assessment algorithms have to be designed that are able to predict the perceptual quality of the information signal without human intervention.

In this context, it is important that the objective quality measurement is consistent with the behavior of the Human Visual System (HVS), which is very complex and not yet sufficiently understood. One approach to solve this issue is to mimic the HVS through a machine learning system trained on suitable subjective quality assessment databases. Although objective quality measurement algorithms based on machine learning have been disclosed previously, there is still quite some room for improvement. While machine learning systems with a linear response cannot correctly handle the complex behavior of the HVS, current machine learning methods with a nonlinear response are difficult to analyze and interpret, which easily leads to false inferences. Hence, there is a need for new methods to improve the prediction of the perceptual quality of a signal.

WO02/089344 discloses a method and apparatus for objective quality measurement of digital information signals such as images, video, speech and/or audio signals based on machine learning. The machine learning based objective quality measurement is performed in two steps. The first step comprises of a selection of predefined objective quality measurement algorithms with a limited scope, meaning that they are only reliable for the perceptual quality prediction of specific content and distortion classes. In the second step, the limited scope objective quality measurement algorithms are combined through adaptive weighting, where the weighting factors can be obtained by training on a subjective quality assessment database. The composite objective quality measurement algorithm is optimized for the perceptual quality prediction on the entire scope of the considered content and distortion classes.

Summary of the invention

An object of the present invention is to solve or at least to reduce the problems discussed above. In particular, it is an object to provide a method and an apparatus leading to an improved prediction accuracy of the perceptual quality of a signal.

In particular according to a first aspect of the invention, there is provided a method for predicting the perceptual quality of a signal x comprising the steps of:

receiving a signal $x$;

subjecting the signal $x$ to a plurality of objective quality measurement algorithms which associate the signal $x$ with a plurality of objective quality measurements $M_i(x)$, $i = 1..m$;

forming a plurality of measurement fusions $U_i(x)$, $i = 1..n$, being normalized weighted sums of the plurality of objective quality measurements $M_i(x)$, $i = 1..m$, wherein each of the measurement fusions $U_i(x)$ is associated with a target value $r_i$ of the perceptual quality in such a way that the weights used when forming the measurement fusions $U_i(x)$ have been optimized to predict the perceptual quality for the associated target value $r_i$; and

predicting the perceptual quality of the signal x by assigning weights to the measurement fusions $U_i(x)$, $i = 1..n$, that depend on the distance

between each of the measurement fusions $U_i(x)$, $i = 1.. n$, and its associated target values $r_i$

In the context of the present application the term perceptual quality should be understood as the mean quality score of a signal as perceived by individuals receiving the signal. The wording signal should be construed as any signal pertaining to data, such as image, video, speech, and/or audio information.

By an objective quality measurement of a signal is generally meant a prediction of the perceptual quality of the signal that does not rely on human interference. The term objective quality measurement algorithm refers to a formula or procedure that associates every signal to a corresponding objective quality measurement.

The above method thus forms a plurality of normalized weighted sums (referred to as measurement fusions) of a plurality of objective quality measurements. The weights used to form each of the measurement fusions are constant, that is, they do not depend on the received signal $x$. The weights are determined in such a way that the prediction accuracy is locally optimized for a certain value of perceptual quality (referred to as the target value of the measurement fusion). This means that if the true (unknown) perceptual quality of the signal $x$ is equal to, say, the target value $r_i$ of the i:th measurement fusion $U_i(x)$, the distance between $r_i$ and $U_i(x)$ will be close to zero. The other measurement fusions $U_j(x)$ are optimized with respect to other target values $r_j$, so that the distance between $r_j$ and $U_j(x)$ is typically larger when $j \neq i$.

Hence, the objective quality prediction will depend more on the measurement fusions being close to their target values than on the measurement fusions being further away from their target values. This can for instance be achieved by weighting the measurement fusions according to their distance to the respective target values. Preferably, each of the assigned weights increases as the distance of the corresponding measurement fusion to the target value decreases. Note that this distance will change depending on the received signal. In other words, the weights used to combine the measurement fusions are adaptive, while, as indicated before, the weights that build up the measurement fusions are constant. Accordingly, the above method thus provides a prediction of the perceptual quality of the signal by cleverly weighting a plurality of locally optimized measurement fusions. In this way an improved accuracy of the resulting prediction of the perceptual quality may be achieved over the whole range of possible values of the perceptual quality.

A further advantage is that the method depends only on one tuning parameter, $n$, being the number of measurement fusions. Increasing n generally increases the overall prediction accuracy and converges very rapidly to the optimal solution. Hence, determining a suitable value for n is a trade-off between prediction accuracy and computational complexity. The computational complexity of the method is furthermore linear in $n$, which simplifies scalability of the prediction model.

According to one embodiment of the present invention the step of weighting the measurement fusions $U_i(x)$, $i$ = 1.. $n$, comprises:

interpolating the plurality of measurement fusions $U_i(x)$, $i$ = 1.. $n$, with respect to the associated target values $r_i$, $i$ = 1.. $n$, of the perceptual quality, and
if there is a single intersection between the interpolation of the measurement fusions $U_i(x)$, $i$ = 1.. $n$, and a diagonal line defined by the functional relationship $f(r) = r$, predicting the perceptual quality of the signal $x$ as the value of the perceptual quality at the single intersection.

In this case, the perceptual quality prediction is thus the unique fixed point of the function that interpolates the measurement fusions with respect to the corresponding target values.

According to one embodiment of the present invention said interpolation is a linear interpolation. This provides a simple and computationally efficient way to adaptively weight the measurement fusions. With a linear interpolation, the predicted perceptual quality of any particular signal $x$ will each time be a linear combination of two of the measurement fusions, say $U_i(x)$ and $U_j(x)$.

According to another embodiment of the present invention the target values $r_i$, $i$ = 1.. $n$, of the perceptual quality are equidistantly spaced over an interval between a minimum perceptual quality and a maximum perceptual quality, hereinafter referred to as the perceptual quality interval. As an advantage, the interpolation procedure is simplified and furthermore it is ensured that the whole range of possible perceptual quality scores is covered. A non-linear spacing of the target values within the interval is however also possible. For example, a more narrow spacing could be used in a range of the interval to more accurately predict the perceptual quality in that particular range.

According to an embodiment of the present invention said method further comprises estimating the weights used when forming said plurality of measurement fusions $U_i(x)$ using training data comprising a representative set of signals that are associated with perceptual quality scores. In this way, the prediction accuracy of the method can be further improved.

According to an embodiment of the present invention the step of estimating the weights pertaining to said plurality of measurement fusions $U_i(x)$ comprises solving an optimization problem based on a ratio (hereinafter referred to as a separation ratio), being a local performance indicator in function of the perceptual quality that, for each of the plurality of objective quality measurement algorithms, is computed as the derivative of the conditional mean, given the perceptual quality, of the objective quality measurement algorithm, weighted by the inverse of the conditional standard deviation, given the perceptual quality, of the objective quality measurement algorithm.

Preferably, the conditional mean, given the perceptual quality, of each of the objective quality measurement algorithms increases monotonically as the perceptual quality increases. In other words, the objective quality measurements tend to increase on average as the perceptual quality increases. If this is the case, the separation ratio will return only positive values which can be directly related to the local prediction accuracy. More precisely, a higher (positive) separation ratio in $q$ corresponds to a higher local prediction accuracy in $q$.

Each of the measurement fusions $U_i(x)$ can thus be obtained by normalizing the weighted sum of the objective quality measurement algorithms that maximizes the separation ratio in the target value $r_i$. In this way, the prediction accuracy of $U_i(x)$ will be locally optimized in $r_i$.

When the weights that build up the measurement fusions are all positive, the perceptual quality prediction is ensured to never contradict the individual objective quality measurements: if the objective quality measurements of one signal $x_1$ are all higher than the corresponding objective quality measurements of a second signal $x_2$, then the perceptual quality prediction of $x_1$ will also be higher than the perceptual quality prediction of $x_2$. This reasonable assumption is often violated by other existing methods to combine objective quality measurement algorithms, which indicates over-fitting on the training data.

According to an embodiment of the present invention the optimization problem is a convex quadratic programming problem.

As an advantage, the optimization problem can now be solved efficiently by various algorithms that always provide a global minimum.

According to an embodiment of the present invention said method further comprises estimating said conditional mean and said conditional standard deviation by applying a two-dimensional regression method using said training data.

Preferably, the two-dimensional regression method comprises applying a weighted least squares minimization to estimate said conditional mean and said conditional standard deviation. In this way, a non-homogeneous variance in said training data may be accounted for.

According to an embodiment of the present invention said two-dimensional regression method is a logistic regression method, wherein said conditional mean and said conditional standard deviation are modeled by generalized logistic functions. Typically, the generalized logistic functions used each have four parameters. Applying a generalized logistic regression method is found to give a good fit to the training data. As a consequence, the estimation of the weights used to form the normalized weighted sums is improved.

The method may further comprise determining initial estimates of the conditional mean and the conditional standard deviation by applying a non-parametric regression method on the training data, and using the initial estimates as start values when applying said two-dimensional regression method.

In some situations it may happen that there is not an intersection of the interpolation of the measurement fusions and the diagonal line. The method may therefore further comprise the step of:

if each of the plurality of measurement fusions $U_i(x)$ is larger than its associated target value $r_i$, predicting the perceptual quality as the measurement fusion being associated with the largest target value,
if each of the plurality of measurement fusions $U_i(x)$ is smaller than its associated target value $r_i$, predicting the perceptual quality as the measurement fusion being associated with the smallest target value.

Another situation which may occur is that there are multiple intersections between the interpolation of the plurality of measurement fusions and the diagonal line. If so, the method may further comprise at least one of the steps of: sending an error message, predicting the perceptual quality as the mean value at said plurality of intersections, outputting a prediction interval comprising the perceptual quality values at said plurality of intersections.

In this manner, the method may thus deal with exceptional cases which may occur.

Some objective quality measurement algorithms require one or more feature values extracted from a reference signal as input in addition to the signal. The method may therefore further comprise receiving a reference signal y, and wherein the step of subjecting the signal x to a plurality of objective quality measurement algorithms comprises subjecting the signal $x$ as well as the reference signal $y$ to at least one of the plurality of objective quality measurement algorithms.

According to a second aspect of the present invention a computer-readable medium is provided, said computer-readable medium comprising computer code instructions for performing the method of the first aspect when executed on a device having processing capabilities.

The above disclosed features and advantages of the first aspect are also applicable to the second aspect.

According to a third aspect of the present invention there is provided an apparatus for predicting the perceptual quality of a signal x, comprising:

a receiver configured to receive a signal $x$;
a processing unit configured to:
subject the signal $x$ to a plurality of objective quality measurement algorithms which associate the signal $x$ with a plurality of objective quality measurements $M_i(x)$, $i = 1..m$,
form a plurality of measurement fusions $U_i(x)$, $i = 1..n$, being normalized weighted sums of the plurality of objective

quality measurements $M_i(x)$, $i = 1..m$, wherein each of the measurement fusions $U_i(x)$ is associated with a target value $r_i$ of the perceptual quality in such a way that the weights used when forming the measurement fusion $U_i(x)$ have been optimized to predict the perceptual quality for the associated target value $r_i$, and

predict the perceptual quality of the signal $x$ by assigning weights to the measurement fusions $U_i(x)$, $i = 1..n$, that depend on the distance between each of the measurement fusions $U_i(x)$, $i = 1.. n$, and their associated target value $r_i$.

The above disclosed features and advantages of the first aspect are also applicable to the third aspect.

It is noted that the invention relates to all possible combinations of features recited in the claims.

Brief description of the drawings

This and other aspects of the present invention will now be described in more detail, with reference to the appended drawings showing embodiments of the invention.

Fig. 1 shows a schematic overview of an apparatus for predicting the perceptual quality of a signal according to an embodiment of the invention;

Fig. 2 is a flowchart of a method for predicting the perceptual quality of a signal according to an embodiment of the invention;

Fig. 3 is a schematic illustration of a method for predicting the perceptual quality of a signal according to an embodiment of the invention;

Fig. 4 is a schematic illustration of a procedure to predict the perceptual quality of a signal according an embodiment of the present invention;

Fig. 5 is a flowchart of a method for estimating weights from training data according to an embodiment of the invention.

Fig. 6 is a visualization of three selected input objective quality measurement algorithms according to an example of the invention.

Fig. 7 is an illustration of plots where the measurement fusions and the final output of the inventive method are evaluated on a subjective quality assessment database according to an example of the invention.

Fig. 8 illustrates two examples of severe false orderings of images by prior art methods.

Fig. 9 illustrates the response of a stress test performed with respect to the method according to embodiments and prior art methods.

As illustrated in the figures, the sizes of layers and regions are exaggerated for illustrative purposes and, thus, are provided to illustrate the general structures of embodiments of the present invention. Like reference numerals refer to like elements throughout.

Detailed description

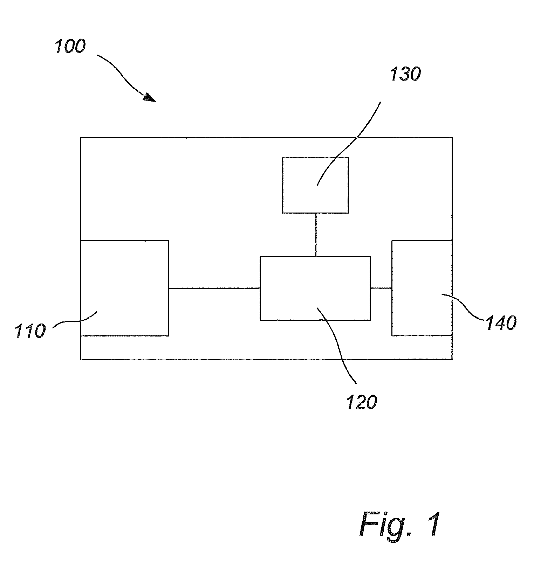

Fig. 1 illustrates an apparatus 100 for predicting the perceptual quality of a signal. The apparatus 100 comprises a receiver 110, a processing unit 120, a memory 130 and an input/output port 140. The receiver 120 and input/output port 140 are connected to and controlled by the processing unit 120, which is further connected to the memory 130. The receiver 120 is configured to receive signals. The processing unit 120 is arranged to receive and process data from the receiver 120 and to communicate with the memory 130 and the input/output port 140.

The memory 130 is arranged to store data pertaining to, for instance, signals, test scores, quality measurement algorithms, measurement fusions, target values, and computer executable code for predicting the perceptual quality of a signal. Examples of a memory 130 include, but are not limited to, Read-Only Memory (ROM), Random Access Memory (RAM), Erasable Programmable ROM (EPROM), Electrically Erasable Programmable ROM (EEPROM), and flash memory.

The input/output port 140 is arranged to output data pertaining to the perceptual quality of a signal. The input/output port 140 may connect the apparatus 100 to a computer device, or a communication network.

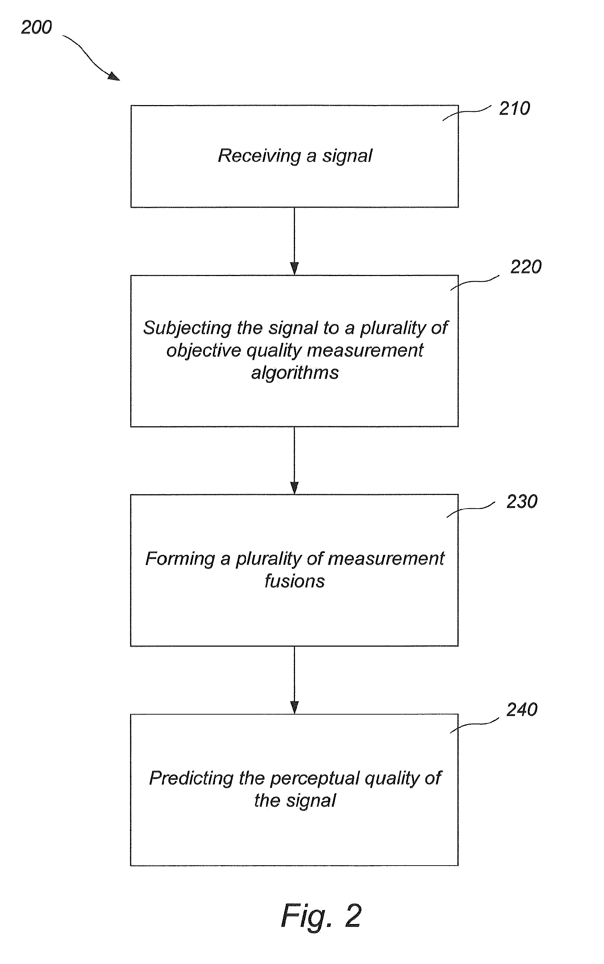

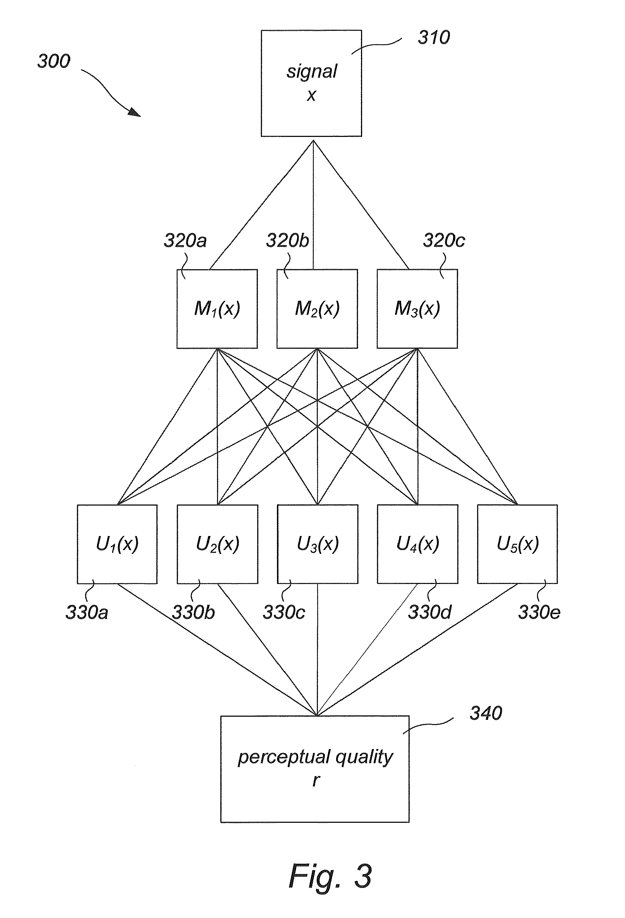

The operation of the apparatus 100 will now be described with reference to Fig. 3 and the flow chart of Fig. 2.

The processing unit 120 receives in step 210 a signal 310, here denoted by x, for which the perceptual quality 340 is to be predicted. The signal 310 may for example be received via the receiver 110 or accessed from the memory 130. The signal $x$ may generally be any type of signal for which a prediction of the perceptual quality may be of interest, such as an image signal, a video signal, a speech signal, and/or an audio signal. In this example, however, the signal $x$ is an image which is intended to be viewed by a (subjective) viewer.

In some embodiments, step 210 may also comprise receiving one or more feature values extracted from a reference signal, which in the following is denoted by $y$. The signals $x$ and $y$ may then form a set of signals $(x, y)$ comprising the reference signal $y$ and a signal $x$ that has been distorted or in other way altered relative to the reference signal $y$.

The predicted perceptual quality of the signal $x$ is in such a situation determined relative to the reference signal $y$.

The processing unit 120 subjects in step 220 the signal 310 to a plurality of objective quality measurement algorithms, which associate the signal 310 with a plurality of objective quality measurements $M_i(x)$, $i = 1..m$, 320a-c, here illustrated by three objective quality measurements $M_1(x)$, $M_2(x)$, and $M_3(x)$. In general, any suitable number of objective quality measurement algorithms may be used. The objective quality measurement algorithms are predefined and data pertaining thereto may for example be accessed from the memory 130.

The objective quality measurement algorithms are constructed from a selection of signal descriptors that are associated with certain characteristics affecting the perceptual quality of the signal 310. The signal descriptors may comprise content-related characteristics, such as contrast, texture and structure of the signal 310, or signal distortion characteristics, such as white noise or blocking artifacts in the signal 310. In order to determine the objective quality measurements 320a-c, the processing unit 120 may thus first extract signal descriptors from the signal 310, and then determine the objective quality measurements 320a-c based on the extracted signal descriptors. Different objective quality measurement algorithms may rely on different signal descriptors. As a result, the objective quality measurements 320a-c are reliable for specific content or distortion classes. By way of example, the objective quality measurement 320a may give a measure of the contrast of the signal 310, the objective quality measurement 320b may give a measure of the white noise in the signal 310, and the objective quality measurement 320c may give a measure of the blocking artifacts due to compression or the signal 310.

There are different categories of objective quality measurement algorithms, herein referred to as Full-Reference (FR), Reduced-Reference (RR), or No-Reference (NR).

FR means that the objective quality measurement algorithm requires the entire reference signal $y$ in order to determine the associated objective quality measurement. Examples of FR objective quality measurement algorithms are the *peak signal-to-noise ratio* (PSNR) or *Structural Similarity Index* (SSIM). In applications where a reference signal $y$ is not available, FR objective quality measurement algorithms cannot be used.

RR means that the objective quality measurement algorithm only requires a reduced amount of information regarding the reference signal $y$. Such reduced information regarding the reference signal y may be provided via for instance a side-channel. An example of an RR objective quality measurement algorithm is the *Generalized Video Quality Model* (VQM).

NR means that the objective quality measurement algorithm is completely independent of the reference signal $y$. Most NR objective quality measurement algorithms are limited to detect a single distortion type, such as blurriness, JPEG or JPEG2000 compression artifacts.

The accuracy of an objective quality measurement algorithm to measure a specific aspect of the perceptual quality depends on the type of distortion of the signal 310 as well as on the true perceptual quality of the signal 310. For example, the objective quality measurement algorithm associated with the objective quality measurement 320a may give an accurate estimate of the perceptual quality of the signal 310 for low values of the true perceptual quality of the signal 310, while the objective quality measurement algorithms associated with the objective quality measurements 320b and 320c may give accurate estimates for intermediate and high values of the true perceptual quality of the signal 310, respectively. It is therefore advantageous to form a plurality of objective quality measurement algorithms using signal descriptors from a plurality of categories, since these give estimates that are accurate for different parts of the perceptual quality scale.

The processing unit 120 then, in step 230, proceeds to form a plurality of normalized weighted sums $U_i(x)$ 330a-330e of the plurality of objective quality measurements $M_i(x)$ 320a - 320c. The normalized weighted sums $U_i(x)$ 330a-330e are herein referred to as measurement fusions.

As discussed above, the accuracy of the objective quality measurement algorithms when measuring the perceptual quality of the signal 310 depends on the true value of the perceptual quality of the signal 310. Thus it is advantageous to weight the output of the objective quality measurement algorithms, i.e. the objective quality measurements $M_i(x)$ 320a - 320c differently for different values of the true perceptual quality of the signal 310. For example, if the objective quality measurement algorithm associated with the objective quality measurement 320a gives an accurate estimate of the perceptual quality of the signal 310 for low values of the true perceptual quality of the signal 310, a high weight should be assigned to the objective quality measurement 320a relative to other objective quality measurements 320b-c for low values of the true perceptual quality of the signal 310. Conversely, for intermediate or high values of the true perceptual quality of the signal 310, the objective quality measurement algorithms associated with the objective quality measurements 320b and 320c may give more accurate estimates and accordingly the objective quality measurement 320a should be assigned a low weight relative to other objective quality measurements 320b-c. In other words, the weights used when forming the measurement fusions, i.e. the normalized weighted sums $U_i(x)$ 330a-330e may vary as a function of the true perceptual quality.

Ideally, one would like to have a different set of weights for the objective quality measurements $M_i(x)$ 320a - 320c for each and every value of the perceptual quality in an interval extending between a minimum perceptual quality and a maximum perceptual quality - hereinafter referred to as the perceptual quality interval. However, in practice that would not lead to a feasible implementation.

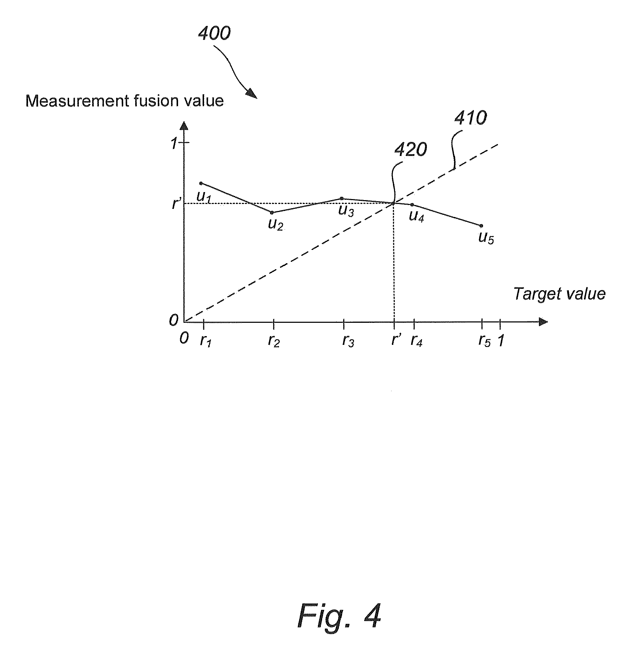

Instead a plurality of perceptual quality values $r_i$, referred to as target values $r_i$, are defined on the perceptual quality interval. This is further illustrated in Fig. 4, where target values $r_1$ to $r_5$ are defined within the perceptual quality interval illustrated by the interval [0, 1]. As the skilled person understands any interval could be used to measure the perceptual quality, it is just a matter of scaling. Also, any number of target values could be defined. For example, the target values $r_i$ could be uniformly sampled over the perceptual quality interval. A large number of target values will lead to an improved prediction accuracy at the cost of increased computational complexity which will be linear in the number of target values.

Each of the target values $r_i$ is associated with a set of weights. The $i$:th target value is associated with a set of weights used by the processing unit 120 to determine the $i$:th normalized weighted sum $U_i(x)$ 330a-330e. In this way, the $i$:th normalized weighted sum $U_i(x)$ is associated with a target value $r_i$ and a set of weights.

The sets of weights used to form the measurement fusions $U_i(x)$ 330a-330e have been estimated on training data and may for example be stored in the memory 130. As will be described later on, the weights corresponding to the i:th target value $r_i$ are estimated such that the prediction accuracy is optimized for signals having a perceptual quality being equal to $r_i$. In order to form the measurement fusions, i.e. the plurality of normalized weighted sums $U_i(x)$, 330a - 330e, the processing unit 120 may thus access the pre-estimated weights from the memory 130 and use them to weight the objective quality measurements 320a-c.

The forming of the $i$:th measurement fusion, i.e. the $i$:th normalized weighted sum $U_i(x)$ 330a - 330e may be carried out in two steps. In a first step, the processing unit 120 may determine a weighted sum of the objective quality measurements $M_i(x)$ 320a - 320c by using the pre-estimated weights associated with the i:th target value $r_i$. In a second step, the processing unit 120 may normalize the weighted sum using a transfer function. Such a normalizing transfer function is typically pre-estimated (as will be described further down) and stored in the memory 130 from where the processing unit 120 may access it.

The processing unit 120 then, in step 240, predicts the perceptual quality $r'$ 340 of the signal 310 based on the measurement fusions, i.e. the normalized weighted sums $U_i(x)$, 330a-e. This involves weighting the measurement fusions $U_i(x)$, using weights that depend on the distance between each of the measurement fusions $U_i(x)$ 330a-e and its associated target value $r_i$. Geometrically, and as illustrated in Fig. 4, this distance may be seen as the distance between the values of the measurement fusions $U_i(x)$ (indicated by $u_1$ to $u_5$ in Fig. 4) and the diagonal line 410.

The rationale behind this is that each of the measurement fusions $U_i(x)$ 330a-e gives a prediction which has an optimized accuracy for a certain target perceptual quality value $r_i$. This means for instance that if the true perceptual quality value of the signal 310 is equal or close to $r_4$, the associated measurement fusion $U_4(x)$ 330b will give an output which is close to $r_4$, whereas the other measurement fusions 330a, 330c-e being optimized for other values of the perceptual quality will give outputs which are further away from $r_4$. In other words, the distance between the measurement fusions $U_i(x)$ 330a-e and their associated target values $r_i$ provides an indication of which of the measurement fusions 330a-e give a reliable prediction for the signal $x$ 310 at hand.

The processing unit 120 may therefore weight the measurement fusion $U_i(x)$ 330a-e in order of decreasing distance to their corresponding target value $r_i$, meaning that the smaller the distance the higher the weight.

According to one embodiment, this may be accomplished by an interpolation method as will now be described with reference to Fig. 4.

Fig. 4 shows a hypothetical response 400 of five measurement fusions $u_1$ to $u_5$ as a function of the associated target values $r_i$. The processing unit 120 may interpolate the plurality of measurement fusions $u_1$ to $u_5$ with respect to the associated target values $r_1$ to $r_5$ of the perceptual quality. The shown interpolation between the plurality of measurement fusions $u_1$ to $u_5$ is here linear as can be seen from the solid lines connecting the measurement fusions $u_1$ to $u_5$. Generally however, any type of interpolation may be used such as spline interpolation.

The processing unit 120 then proceeds to find a point where the interpolation intersects the diagonal line 410, i.e. the line defined by the functional relation $f(r) = r$. In Fig. 4 this is illustrated as a single intersection point 420 between the interpolation of the plurality of measurement fusions $u_1$ to $u_5$ and the dashed diagonal line 410. The single intersection point 420 corresponds to a value $r'$ of the perceptual quality, The processing unit 120 then proceeds to predict the perceptual quality of the signal $x$ 310 as the value of the perceptual quality $r'$ at the single intersection 420.

If, however, a situation occurs where the interpolation of the plurality of measurement fusions $u_1$ to $u_5$ results in a plurality of intersections with the diagonal 410, the processing unit 120 may undertake one of the options to 1) send an error message, for example via input port/output port 140, 2) predict the perceptual quality as the mean value of the perceptual quality at the plurality of intersections, or 3) output a prediction interval comprising the perceptual quality scores at the plurality of intersections.

To this end there may be a situation where there is no intersection between the plurality of measurement fusions $u_1$ to $u_5$ and the diagonal line 410. This situation can only occur in two cases. In a first case, each of the plurality of measurement fusions $u_1$ to $u_5$ is larger than its associated target value $r_1$ to $r_5$. Then the processing unit 120 may predict the perceptual quality as the measurement fusion $u_5$ being associated with the largest target value $r_5$. In a second case, each of the measurement fusions $u_1$ to $u_5$ is smaller than its associated target value $r_1$ to $r_5$. Now, the processing unit 120 may predict the perceptual quality as the measurement fusion $u_1$ being associated with the smallest target value $r_1$.

As discussed above, each of the measurement fusions $U_i(x)$ 330a-e are associated with a target value $r_i$ of the perceptual quality. In particular, the weights used to form each of the measurement fusions $U_i(x)$ are optimized to predict the perceptual quality of signals in a neighborhood of its target value $r_i$. In the following, it will be described how the weights used to form the measurement fusions $U_i(x)$ may be estimated from training data.

The training data comprises a representative set of signals that are associated with perceptual quality scores obtained through subjective quality assessment.

In order to find the weights which lead to optimized prediction of the perceptual quality of signals near its target value $r_i$, an optimization problem needs to be solved. More precisely, the weights should be selected such that the local prediction accuracy of each of the measurement fusion algorithms I $U_i(x)$ is optimized for its corresponding target perceptual quality value $r_i$.

The local prediction accuracy may be defined in terms of a ratio - hereinafter referred to as the separation ratio. In the following, the separation ratio will be described as well as how it may be estimated from training data.

The separation ratio is defined by the following expression:

$$\text{sep}_M(q) = \frac{f_\mu{}'(q)}{f_\sigma(q)}. \qquad (1)$$

Here $f_\mu(q)$ and $f_\sigma(q)$ represent the conditional mean and standard deviation of the objective quality measurement algorithm $M$, given that the perceptual quality is equal to $q$. Then $f_\mu{}'(q)$ represents the mean rate of increase of $M$ in $q$. Hence, the separation ratio in $q$ measures the mean rate of increase $f_\mu{}'(q)$, weighted by the inverse of the conditional standard deviation $f_\sigma(q)$.

The definition of the separation ratio is based on the following basic assumptions regarding the local prediction accuracy of an objective quality measurement algorithm. If $f_\mu{}'(q)$ increases while $f_\sigma(q)$ remains constant, the local prediction accuracy in $q$ should increase at the same rate. If, on the other hand, $f_\sigma(q)$ increases together with $f_\mu{}'(q)$, the aforesaid increase in local prediction accuracy should be partially reduced. In particular, multiplying the objective quality measurement algorithm by a scalar constant $\alpha$ should not change the local prediction accuracy.

The separation ratio of an objective quality measurement algorithm $M$ can be determined through regression analysis based on the training data.

According to embodiments, the conditional mean $f_\mu(q)$ and a lower confidence bound defined by $f_i(q) = f_\mu(q) - f_\sigma(q)$ are modeled by generalized logistic functions having four parameters given by the parameter vector $\beta = (\beta(1),\beta(2),\beta(3),\beta(4))$. The generalized logistic functions may be described by the expression:

$$\text{lgst}_\beta(q) = \beta(1) + \frac{\beta(2)}{1 + \exp\left(-\frac{q - \beta(3)}{\beta(4)}\right)}. \qquad (2)$$

When $f_\mu(q) = \text{lgst}_{\beta_\mu}(q)$ and $f_i(q) = \text{lgst}_{\beta_i}(q)$, the separation ratio may be expressed as

$$\text{sep}_M(q) = \frac{\text{lgst}'_{\beta_\mu}(q)}{\text{lgst}_{\beta_\mu}(q) - \text{lgst}_{\beta_i}(q)}. \qquad (3)$$

The four-dimensional parameter vectors $\beta_\mu$, and $\beta_i$, may be estimated from training data using an ordinary least squares method.

The ordinary least squares method relies on an assumption that the data to be fitted is homoscedastic, meaning that the conditional standard deviation $f_\sigma(q)$ is constant in $q$. In practice, such an assumption is rarely valid, which has the result that the ordinary least squares method gives rise to sub-optimal estimation results. In order to take into account the heteroscedasticity of the objective quality measurements, i.e. the variation of the conditional standard deviation $f_\sigma(q)$ with respect to $q$, a weighted least squares method may be used. In the weighted least squares method, the individual error terms in the sum of squares used to determine the parameter vectors $\beta_\mu$, and $\beta_i$, are weighted in accordance to $1/f\sigma^2(q_i)$.

In order to further improve the accuracy of the estimations, a non-parametric regression of the objective quality measurements may be performed in order to obtain initial estimates $\hat{f}_\mu$ and $\hat{f}_\sigma$ of the conditional mean and standard deviation. The generalized logis tic regression is then applied on a finite number of samples of the initial estimates, say $\hat{f}_\mu(qi)$ and $\hat{f}_\sigma(qi)$ where $i$ ranges from 1 to $n$. The quality values $q_1$ $q_2$, ..., $q_n$ form a discretization of the perceptual quality interval, ranging from a minimum perceptual quality value to a maximum perceptual quality value. If the perceptual quality interval corresponds to the interval [0,1], the samples may for example be of the form $q_i = (i - 1)\Delta$, $i = 1... n$, where $\Delta$ is the step size and $n = 1/\Delta + 1$. A suitable value for the step size may be $\Delta = 0.01$.

The parameter vectors $\beta_\mu$, and $\beta_l$, of the generalized logistic functions may then be estimated by solving the following weighted least squares optimization problems:

$$\beta_\mu = \arg\min_b \sum_{i=1}^{n} \frac{\left(\mathrm{lgst}_b(q_i) - \hat{f}_\mu(q_i)\right)^2}{\hat{f}_\sigma^2(q_i)}, \qquad (4)$$

$$\beta_l = \arg\min_b \sum_{i=1}^{n} \frac{\left(\mathrm{lgst}_b(q_i) - \hat{f}_l(q_i)\right)^2}{\hat{f}_\sigma^2(q_i)}, \qquad (5)$$

where $\hat{f}_l(q_i) = \hat{f}_\mu(q_i) - \hat{f}_\sigma(q_i)$.

By way of example, the initial estimates $\hat{f}_\mu$ and $\hat{f}_\sigma$ may be calculated from the training data in three steps. The training data typically comprises a representative set of signals $x_k$ or a representative set of signals and reference signals $(x_k, y_k)$ associated with perceptual quality scores $q_k$. The signals $x_k$ may be associated with different distortion types $t$, such as compression distortion or noise distortion.

In a first step, the training data is divided into different content-distortion classes $C^{Y,t}$ that consist of all signals $x_k^{y,t}$ associated with the same reference signal $y$ and distortion type $t$, ordered by increasing perceptual quality.

In a second step, the data points $\left(q_k^{y,t}, s_k^{y,t}\right)$ are determined, where $q_k^{y,t}$ is the perceptual quality score corresponding to the signal $x_k^{y,t}$ and $s_k^{y,t}$ is the objective quality measurement corresponding to the signal $x_k^{y,t}$ and the reference signal $y$. These data points are then linearly interpolated to yield a piecewise linear function $\hat{f}_\mu^{y,t}$. This function approximates the conditional mean of $M$ restricted to the content-distortion class $C^{y,t}$.

In a third step, the values of $\hat{f}_\mu(q)$ and $\hat{f}_\sigma(q)$ are determined as the sample mean and sample standard deviation of $\hat{f}_\mu^{y,t}(q)$ over all $y$ and $t$.

When the logistic regression is directly applied on the raw training data, the regression line may be biased towards the content-distortion classes that are clustered near a specific quality score. An initial nonparametric regression, on the other hand, ensures that all content-distortion classes are equally weighted over the whole perceptual quality interval.

In conclusion, the separation ratio thus provides a measure for the local prediction accuracy of an objective quality measurement algorithm $M$. The separation ratio may be calculated by performing logistic regression on training data. Optionally, the logistic regression may be preceded by initial nonparametric estimates of the conditional mean and standard deviation to further improve the fitting robustness.

It will now be described in more detail how the weights used to form the measurement fusions $U_i(x)$ may be determined based on the separation ratio.

In order to form the measurement fusion corresponding to the target value $r$, the objective quality measurement algorithms $M_1$, $M_2$, ..., $M_m$ are linearly combined to a weighted quality measurement algorithm $W_r = \mathbf{w}_r^T \mathbf{M}$, where $w_r$ is the optimal vector of weights, and $\mathbf{M}$ is a vector of the objective quality measurement algorithms. The optimal weight vector is then determined as the solution to the optimization problem

$$\mathbf{w}_r = \arg\max_{\mathbf{w} \geq 0}\left(\mathrm{sep}_{\mathbf{w}^T M}(r)\right). \qquad (6)$$

Expressed in words, the optimal vector or weights corresponding to a target value $r$ is determined as the vector of weights that maximizes the local prediction accuracy, i.e. the separation ratio, for that target value $r$. Differently stated, the weighted quality measurement algorithm $W_r$ is optimized to predict the perceptual quality of signals near its target value $r$.

The above optimization problem corresponds to a convex quadratic programming problem and can as such be efficiently solved. More precisely, by introducing the $m$-dimensional vector $\mathbf{v}_r$ with $\mathbf{v}_r(i)$ the mean rate of increase of $M_i$ in $r$ and the $m \times m$ covariance matrix $\Sigma_r$ with $\Sigma_r(i, j)$ the conditional covariance of $M_i$ and $M_j$, given that the perceptual quality is $r$, the above optimization problem can be written in the form

$$\mathbf{w}_r = \arg\max_{w \geq 0}\frac{\mathbf{w}^T\mathbf{v}_r}{\sqrt{\mathbf{w}^T\Sigma_r\mathbf{w}}}. \qquad (7)$$

The weight vector may then be obtained by minimizing $\mathbf{w}^T \Sigma_r\mathbf{w}$ given the constraints $\mathbf{w}^T\mathbf{v}_r = 1$, and $\mathbf{w} \geq 0$. The weight vector may optionally be rescaled so that it sums to one.

The vectors $\mathbf{v}_r$ and $\Sigma_r$ may be determined as follows. Denote by $f_{\mu,i}(r)$ and $f_{\sigma,i}(r)$ the conditional mean and standard deviation of the objective quality measurement algorithm $M_i$ given that the perceptual quality is $r$. Then

$$\mathbf{v}_r = \left(f'_{\mu,1}(r), f'_{\mu,2}(r), \ldots, f'_{\mu,m}(r)\right) \text{ and} \qquad (8)$$

$$\Sigma_r(i,j) = 2f^2_{\sigma,i,j}(r) - \frac{1}{2}\left(f^2_{\sigma,i}(r) + f^2_{\sigma,j}(r)\right), \qquad (9)$$

where $f_{\sigma,i,j}$ is the conditional standard deviation of the objective quality measurement algorithm $M_{i,j} = (M_i + M_j)/2$. The values of $f_{\mu,i}(r), f_{\sigma,i}(r), f_{\sigma,j}(r)$ and $f_{\sigma,i,j}(r)$ may be estimated by generalized logistic functions two steps. First, the conditional means and lower confidence bounds of the objective quality measurement algorithms $M_i$, $M_j$ and $M_{i,j}$ are approximated by generalized logistic functions in the same way as described above in connection to equations 2 and 3. Second, the conditional standard deviations of $M_i$, $M_j$ and $M_{i,j}$ are estimated by the difference of two generalized logistic functions that respectively approximate the conditional mean and lower confidence bound of the corresponding objective quality measurement algorithm.

The weighted objective quality measurement algorithm $W_r$ may then be normalized to yield the normalized weighted sum $U_r$ corresponding to the target value r. The normalization means that the weighted objective quality measurement algorithm $W_r$ is mapped to the perceptual quality scale. By way of example, this means that an objective score of 0.2 should correspond to a perceptual quality of 0.2, an objective score of 0.5 should correspond to a perceptual quality of 0.5, and so on. In other words, the relationship between the objective quality predictions and the perceptual quality scores should be made linear.

The mapping is defined by a transfer function $g_r$ which when applied to the weighted quality measurement algorithm $W_r$ gives the normalized weighted *sum* $U_r$ in accordance to the equation

$$U_r = g_r \circ W_r. \qquad (10)$$

Denote by $f_{\mu,wr}(q)$ the conditional mean of $W_r$ given that the perceptual quality is $q$. Then $f_{\mu,wr}(q)$ represents the mean objective score of $W_r$ when the true perceptual quality is $q$. This score should be mapped by the transfer function to the true perceptual quality. The transfer function $g_r$ may therefore be determined from the relation that $gr(f_{\mu,wr}(q)) = q$ for every $q$ in the perceptual quality interval.

The transfer function $g_r$ resulting from this relation is given by $g_r(q) = f_{\mu,\mathbf{w}_r}^{-1}(q)$. The conditional mean function $f_{\mu,wr}$ may again be modeled by a generalized logistic function with parameter vector $\beta_r$ as explained before. The inverse of this generalized logistic function is then a generalized logit function:

$$\mathrm{logit}_{\beta_r}(s) = \beta_r(3) + \beta_r(4)\log\left(\frac{s - \beta_r(1)}{\beta_r(2) - s + \beta_r(1)}\right). \qquad (11)$$

The transfer function $g_r$ is hence given by

$$g_r(s) = \mathrm{logit}_{\beta_r}(s). \qquad (12)$$

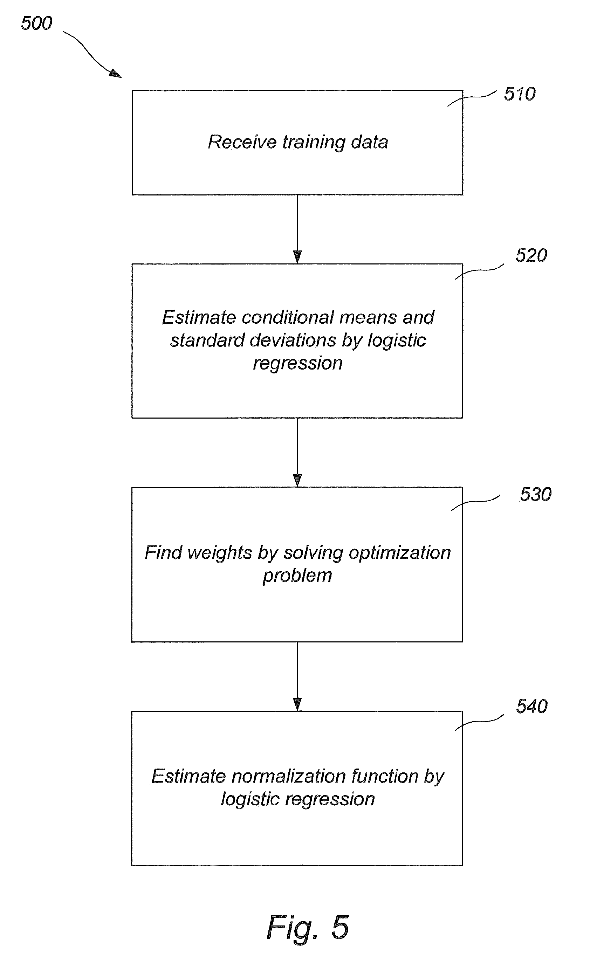

To sum up, the steps taken by the processing unit 120 to estimate the weights and the normalization function used to form the normalized weighted sums $U_i$ will now be described with reference to the flowchart of Fig. 5 and the above equations.

In step 510, the processing unit 120 receives training data. The training data typically comprises a representative set of signals $x_k$ or a representative set of signals and reference signals $(x_k, y_k)$ associated with perceptual quality scores $q_k$.

In step 520, the processing unit 120 estimates the conditional means and standard deviations $f_{\mu,i}(r), f_{\sigma,i}(r), f_{\sigma,j}(r)$ and $f_{\sigma,i,j}(r)$, for example by performing logistic regression. The parameters of the logistic regression may for example be estimated by applying a weighted least squares method, for example as explained in connection to equations 4 and 5.

In step 530, the processing unit 120 determines the weights used to form the normalized weighted sums $U_i$. The weights may for example be determined by solving the optimization problem defined by equations 6 and 7, using the estimates from step 520.

In step 540, the normalizing transfer functions $g_{ri}$ used to perform the normalization to obtain the normalized weighted sums $U_i$ may be estimated based on the training data. For example the transfer functions $g_{ri}$ may be estimated using a generalized logistic regression as explained in connection to equations 11 and 12.

The person skilled in the art realizes that the present invention by no means is limited to the preferred embodiments described above. On the contrary, many modifications and variations are possible within the scope of the appended claims. For example, other types of parametric regression, such as polynomial regression, may be used instead of logistic regression. Alternatively, a pure non-parametric regression method may be used to estimate the conditional means and standard deviations, given the perceptual quality, of the objective quality measurement algorithms.

Example

In order to demonstrate the functionality of the invention, the above-disclosed method was used for the combination of three predefined objective quality measurement algorithms for still images. The selected input objective quality measurement algorithms all have a limited scope of application and are therefore only reliable for specific content and distortion classes.

The first objective quality measurement algorithm, denoted by M_JPEG, is developed in for a no-reference quality prediction of JPEG compressed images (see Z. Wang H. R. Sheikh, and A. C. Bovik, "No-reference perceptual quality assessment of JPEG compressed images," IEEE International conference on Image Processing, 2002). The quality estimation is based on three image features that measure the intensity of the blocking artifacts and the attenuation of detail in the discrete cosine transform blocks.

The second objective quality measurement algorithm, denoted by M_SILOSS, is part of the NTIA General Video Quality Model and detects a decrease or loss of spatial information (see M. Pinson and S. Wolf, "A new standardized method for objectively measuring video quality," IEEE Transactions on broadcasting, vol. 50, no. 3n pp. 312-322, 2004). This algorithm is defined by $\mathrm{M\_SILOSS}(x, y) = \min\left(\frac{f_{SI}(y)+1}{f_{SI}(x)+1}; 1\right)$, where the feature $f_{SI}$ measures the gradient variability. More precisely, $f_{SI}(x) = \mathrm{std}\left(\sqrt{G_h^2(x) + G_v^2(x)}\right)$, where $G_h(x)$ and $G_v(x)$ are respectively the horizontal and vertical Sobel operators.

The third objective quality measurement algorithm, denoted by M_CON, is the contrast component of the popular SSIM index (see Z. Wang, L. Lu, and A.C. Bovik, "Image quality assessment: From error visibility to structural similarity," IEEE Transactions on Image Processing, vol. 13, no. 4, pp. 600-612, 2004). It is defined by

$$M\_CON(x, y) = 1 - \frac{\left(std(x_i) - std(y_i)\right)^2 + 58}{std(x_i)^2 + std(y_i)^2 + 58}.$$

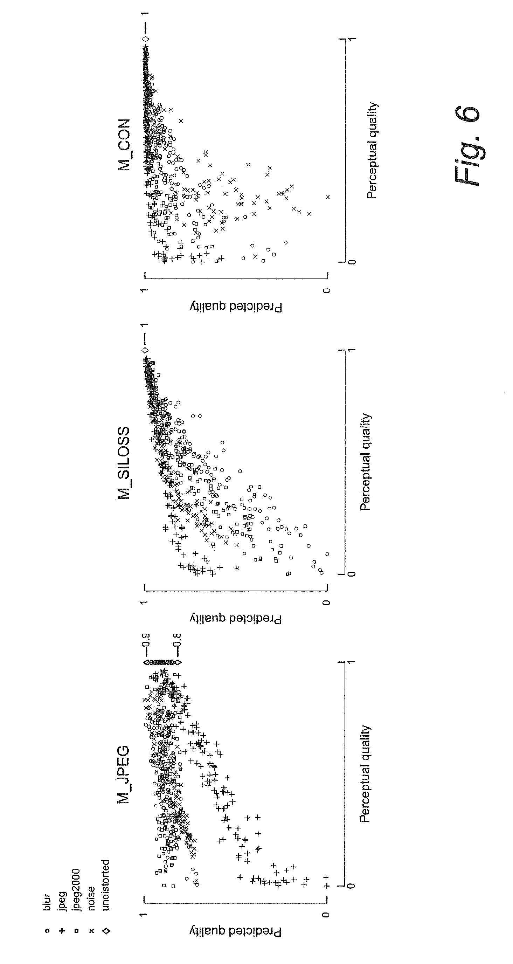

Fig. 6 visualizes the selected input objective quality measurement algorithms. As is evident from Fig.6, the input quality measurement algorithms M_JPEG, M_SILOSS and M_CON, here evaluated on the LIVE subjective quality assessment database, respond differently to the distortion types. For example, M_JPEG is only reliable for JPEG compression, while M_CON is more sensitive to white noise than M_SILOSS. For consistency reasons, the responses of quality measurement algorithms are linearly scaled to the interval [0,1].

The output of the inventive method of with five measurement fusions, trained on the LIVE subjective quality assessment database (available at http://live.ece.utexas.edu/research/quality), is optimized for the perceptual quality prediction on the entire scope of considered content and distortion classes.

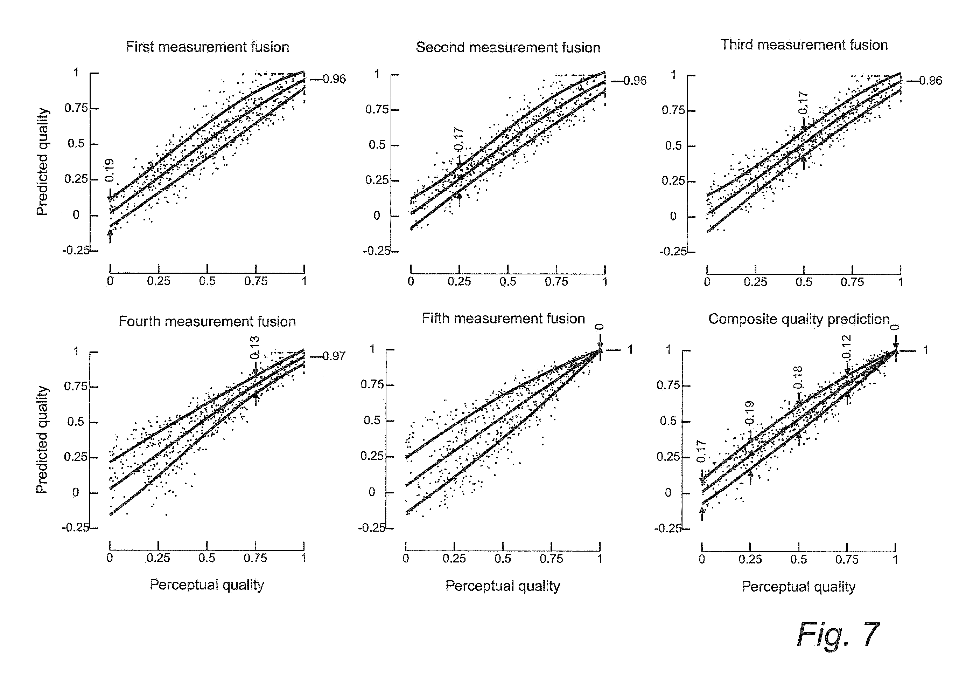

Fig. 7 illustrates plots where the measurement fusions and the final output of the inventive method are evaluated on the LIVE subjective quality assessment database. The arrows indicate twice the value of the conditional standard deviation at the target quality scores.

The prediction accuracy of the composite quality measurement algorithm is compared to those obtained through traditional machine learning. As representatives of the various available machine learning methods, the Feed Forward Neural Network (FFNN), the General Regression Neural Network (GRNN), and the Principal Component Regression (PCR) were selected. Three validation tests were performed: a repeated cross-validation on the LIVE database (available at http://live.ece.utexas.edu/research/quality) , a database independence test on the CSIQ database (available at http://vision.okstate.edu/index.php?loc=csiq), and a robustness test on the TID database (available at http://www.ponomarenko.info/tid2008.htm). The experimental results are summarized in the table below, where the correlation with perceptual quality is measured in terms of the Pearson Linear Correlation Coefficient (PLCC) and the Spearman Rank Correlation Coefficient (SRCC).

| Test 1 | Repeated cross-validation on the LIVE database | | | |
|---|---|---|---|---|
| | Invention | FFNN | GRNN | PCR |
| Median PLCC | 0.960 | 0.965 | 0.960 | 0.944 |
| Median SRCC | 0.957 | 0.963 | 0.961 | 0.944 |

| Test 2 | Database independence | | | |
|---|---|---|---|---|
| | Invention | FFNN | GRNN | PCR |
| PLCC | 0.967 | 0.959 | 0.955 | 0.953 |
| SRCC | 0.963 | 0.961 | 0.956 | 0.937 |

| Test 3 | Robustness for unknown distortions | | | |
|---|---|---|---|---|
| | Invention | FFNN | GRNN | PCR |
| PLCC | 0.822 | 0.790 | 0.794 | 0.808 |
| SRCC | 0.810 | 0.793 | 0.786 | 0.797 |

Complementary stress tests were also performed to expose potential vulnerabilities in the design of the composite quality measurement algorithms. To this end, a collection of 650 reference images were systematically degraded at gradually increasing distortion levels. The stress test database so obtained contains 26,000 distorted images and is available at http://mf.etro.vub.ac.be/LAF.

In a first stress test, the number of false orderings produced by the measurement fusion methods were counted and compared. When the source content is kept fixed, the response of an objective quality measurement algorithm should ideally decrease as the distortion level increases. An image pair for which this rule is violated reveals a false ordering of the quality measurement algorithm.

On the constructed stress test database, the FFNN, GRNN and PCR methods respectively produce a total of 119, 2383, and 342 false orderings. Some of these false orderings have a high level of visibility. The inventive method produces no more than six false orderings, each of them almost invisible to human eye.

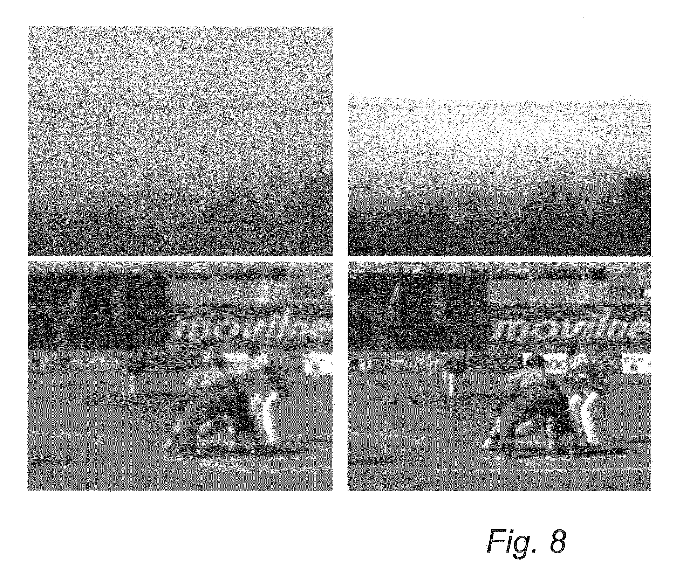

Fig. 8 illustrates two examples of severe false orderings. The image pair at the top is falsely ordered by the FFNN method, which claims that the left image has a higher perceptual quality than the right image. The image pair at the bottom is falsely ordered by the GRNN method.

In a second stress test, the response of the composite measurement algorithms on the undistorted reference images was investigated. In contrast to the traditional machine learning methods, the inventive method always assigns the maximum perceptual quality score to reference images.

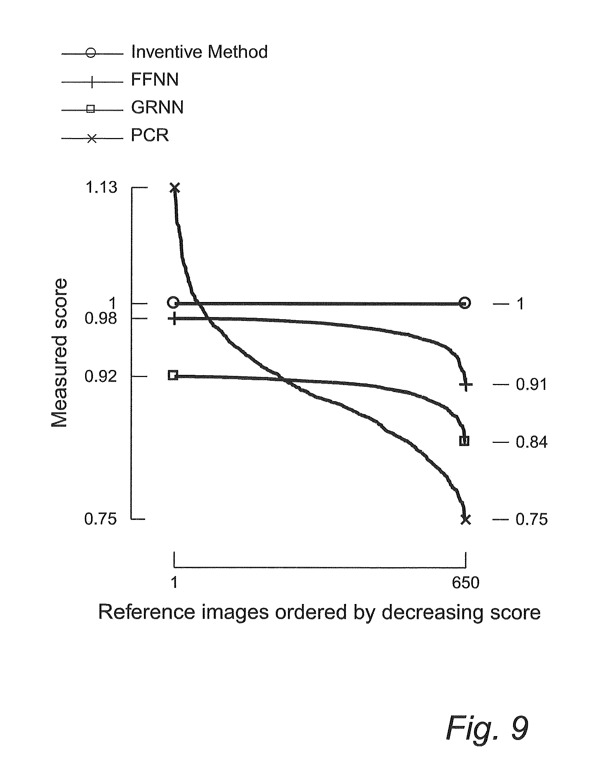

As shown in Fig. 9, FFNN and GRNN systematically underrate the perceptual quality of the reference images in the stress test database. The PCR output scores vary from 0.75 to 1.13. Only the inventive method always assigns the maximum perceptual quality score to reference images.

## Claims

1. A method for predicting the perceptual quality of a signal $x$ (310) comprising the steps of:

   receiving (210) a signal $x$ (310);
   subjecting (220) the signal $x$ (310) to a plurality of objective quality measurement algorithms which associate the signal x with a plurality of objective quality measurements $M_i(x)$, $i = 1..m$, (320a-c);
   forming (230) a plurality of measurement fusions $U_i(x)$, $i = 1..n$, (330a-e) being normalized weighted sums of the plurality of objective quality measurements $M_i(x)$, $i = 1..m$, (320a-c), wherein each of the measurement fusions $U_i(x)$ (330a-e) is associated with a target value $r_i$ of the perceptual quality in such a way that the weights used when forming the measurement fusion $U_i(x)$ (330a-e) have been optimized to predict the perceptual quality for the associated target value $r_i$; and
   predicting (240) the perceptual quality of the signal x (310) by assigning weights to the measurement fusions $U_i(x)$, $i = 1..n$, (330a-e) that depend on the distance between each of the measurement fusions $U_i(x)$, $i = 1..n$, (330a-e) and its associated target value $r_i$.

2. The method according to claim 1, wherein the step of weighting the measurement fusions $U_i(x)$, $i = 1..n$, (330a-e) comprises:

   interpolating the plurality of measurement fusions $U_i(x)$, $i = 1..n$, (330a-e) with respect to the associated target values $r_i$, $i = 1..n$, of the perceptual quality, and
   if there is a single intersection (420) between the interpolation of the measurement fusions $U_i(x)$, $i = 1..n$, (330a-e) and a diagonal line (410) defined by the functional relationship $f(r) = r$, predicting the perceptual quality of the signal $x$ (310) as the value of the perceptual quality at the single intersection (420).

3. The method according to claim 2, wherein said interpolation is a linear interpolation.

4. The method according to any one of the preceding claims, wherein the target values $r_i$, $i = 1..n$, of the perceptual quality are equidistantly spaced over an interval between a minimum perceptual quality and a maximum perceptual quality.

5. The method according to any one of the preceding claims, further comprising:

   estimating the weights used when forming said plurality of measurement fusions $U_i(x)$ (330a-e) using training data comprising a representative set of signals that are associated with perceptual quality scores.

6. The method according to claim 5, wherein the step of estimating the weights pertaining to said plurality of measurement fusions $U_i(x)$ (330a-e) comprises solving an optimization problem based on a ratio being a local performance indicator in function of the perceptual quality that, for each of the plurality of objective quality measurement algorithms, is computed as the derivative of the conditional mean, given the perceptual quality, of the objective quality measurement algorithm, weighted by the inverse of the conditional standard deviation, given the perceptual quality, of the objective quality measurement algorithm.

7. The method according to any claims 6, wherein the optimization problem is a convex quadratic programming problem.

8. The method according to any one of claims 6-7, further comprising estimating said conditional mean and said conditional standard deviation by applying a two-dimensional regression method using said training data.

9. The method according to claim 8, wherein said two-dimensional regression method is a logistic regression method, wherein said conditional mean and said conditional standard deviation are modeled by generalized logistic functions.

10. The method according to any one of claim 8 or 9, further comprising determining initial estimates of said conditional mean and said conditional standard deviation by applying a non-parametric regression method on said training data, and using said initial estimates as start values when applying said two-dimensional regression method.

11. The method according to any one of the preceding claims, further comprising the step of:

if each of the plurality of measurement fusions $U_i(x)$ (330a-e) is larger than its associated target value $r_i$, predicting the perceptual quality as the measurement fusion (330a-d) being associated with the largest target value,
if each of the plurality of measurement fusions $U_i(x)$ (330a-e) is smaller than its associated target value $r_i$, predicting the perceptual quality as the measurement fusion (330a-e) being associated with the smallest target value.

12. The method according to any one of claims 2-11, wherein, if said interpolation of said plurality of measurement fusions $U_i(x)$, $i = 1..n$, (330a-e) results in a plurality of intersections with said diagonal line (410), the method further comprises at least one of the steps of:

sending an error message;
predicting the perceptual quality as the mean value at said plurality of intersections;
outputting a prediction interval comprising the perceptual quality values at said plurality of intersections.

13. The method according to any one of the preceding claims, further comprising receiving a reference signal y, and wherein the step of subjecting the signal $x$ (310) to a plurality of objective quality measurement algorithms comprises subjecting the signal x as well as the reference signal $y$ to at least one of the plurality of objective quality measurement algorithms.

14. A computer-readable medium comprising computer code instructions for performing the method of any one of claims 1-13 when executed on a device having processing capabilities.

15. An apparatus for predicting the perceptual quality of a signal $x$ (310), comprising:

a receiver (110) configured to receive a signal $x$ (310);
a processing unit (120) configured to:

subject the signal $x$ (310) to a plurality of objective quality measurement algorithms which associate the signal $x$ (310) with a plurality of objective quality measurements $M_i(x)$, $i = 1..m$, (320a-c),
form a plurality of measurement fusions $U_i(x)$, $i = 1..n$, (330a-e) being normalized weighted sums of the plurality of objective quality measurements $M_i(x)$, $i = 1..m$, (320a-c), wherein each of the measurement fusions $U_i(x)$ (330a-e) is associated with a target value $r_i$ of the perceptual quality in such a way that the weights used when forming the measurement fusion (330a-e) have been optimized to predict the perceptual quality for the associated target value $r_i$, and
predict the perceptual quality of the signal $x$ by assigning weights to the measurement fusions $U_i(x)$, $i = 1..n$, (330a-e) that depend on the distance between each of the measurement fusions $U_i(x)$, $i = 1..n$, (330a-e) and its associated target value $r_i$.

100

130

110

120

140

*Fig. 1*

*200*

**210**

Receiving a signal

**220**

Subjecting the signal to a plurality of objective quality measurement algorithms

**230**

Forming a plurality of measurement fusions

**240**

Predicting the perceptual quality of the signal

*Fig. 2*

300

310

signal
x

320a        320b        320c

$M_1(x)$      $M_2(x)$      $M_3(x)$

$U_1(x)$    $U_2(x)$    $U_3(x)$    $U_4(x)$    $U_5(x)$

330a      330b      330c      330d      330e

340

perceptual quality
r

*Fig. 3*

Fig. 4

500

```
                ┌─────────────────────────────────┐  510
                │                                 │
                │       Receive training data     │
                │                                 │
                └─────────────────────────────────┘
                                │
                                ▼
                ┌─────────────────────────────────┐  520
                │                                 │
                │  Estimate conditional means and │
                │   standard deviations by logistic│
                │            regression           │
                │                                 │
                └─────────────────────────────────┘
                                │
                                ▼
                ┌─────────────────────────────────┐  530
                │                                 │
                │  Find weights by solving optimization│
                │            problem              │
                │                                 │
                └─────────────────────────────────┘
                                │
                                ▼
                ┌─────────────────────────────────┐  540
                │                                 │
                │  Estimate normalization function by│
                │        logistic regression      │
                │                                 │
                └─────────────────────────────────┘
```

*Fig. 5*

Fig. 6

First measurement fusion

Second measurement fusion

Third measurement fusion

Fourth measurement fusion

Fifth measurement fusion

Composite quality prediction

Perceptual quality

*Fig. 7*

EP 2 808 829 A1

Fig. 8

*Fig. 9*

Europäisches
Patentamt

European
Patent Office

Office européen
des brevets

## EUROPEAN SEARCH REPORT

Application Number

EP 13 16 9527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TSUNG-JUNG LIU ET AL: "Image Quality Assessment Using Multi-Method Fusion", IEEE TRANSACTIONS ON IMAGE PROCESSING, IEEE SERVICE CENTER, PISCATAWAY, NJ, US, vol. 22, no. 5, 1 May 2013 (2013-05-01), pages 1793-1807, XP011497083, ISSN: 1057-7149, DOI: 10.1109/TIP.2012.2236343 * Section III.A, Section III.B, Section III.C; figure 1 * | 1-15 | INV. G06K9/62 H04N7/26 |
| A | KALPANA SESHADRINATHAN ET AL: "Study of Subjective and Objective Quality Assessment of Video", IEEE TRANSACTIONS ON IMAGE PROCESSING, IEEE SERVICE CENTER, PISCATAWAY, NJ, US, vol. 19, no. 6, 1 June 2010 (2010-06-01), pages 1427-1441, XP011328552, ISSN: 1057-7149, DOI: 10.1109/TIP.2010.2042111 * Section III, Section IV.A, Section IV.B * | 1-15 | |
| X | TSUNG-JUNG LIU ET AL: "Visual quality assessment: recent developments, coding applications and future trends", APSIPA TRANSACTIONS ON SIGNAL AND INFORMATION PROCESSING, vol. 2, 1 January 2013 (2013-01-01), XP055085128, DOI: 10.1017/ATSIP.2013.5 * Section II.B * | 1,14,15 | TECHNICAL FIELDS SEARCHED (IPC) G06K H04N |

-/--

The present search report has been drawn up for all claims

| Place of search | Date of completion of the search | Examiner |
|---|---|---|
| The Hague | 29 October 2013 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 16 9527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTOPHE CHARRIER ET AL: "Machine learning to design full-reference image quality assessment algorithm", SIGNAL PROCESSING. IMAGE COMMUNICATION, ELSEVIER SCIENCE PUBLISHERS, AMSTERDAM, NL, vol. 27, no. 3, 3 January 2012 (2012-01-03), pages 209-219, XP028403267, ISSN: 0923-5965, DOI: 10.1016/J.IMAGE.2012.01.002 [retrieved on 2012-02-03] * Section 3; figure 1 * | 1,14,15 | |
| X | CHAOFENG LI ET AL: "Blind Image Quality Assessment Using a General Regression Neural Network", IEEE TRANSACTIONS ON NEURAL NETWORKS, IEEE SERVICE CENTER, PISCATAWAY, NJ, US, vol. 22, no. 5, 1 May 2011 (2011-05-01), pages 793-799, XP011321654, ISSN: 1045-9227, DOI: 10.1109/TNN.2011.2120620 * Section II, Section III * | 1,14,15 | TECHNICAL FIELDS SEARCHED (IPC) |

The present search report has been drawn up for all claims

| Place of search | Date of completion of the search | Examiner |
|---|---|---|
| The Hague | 29 October 2013 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02089344 A

**Non-patent literature cited in the description**

- **Z. WANG ; H. R. SHEIKH ; A. C. BOVIK.** No-reference perceptual quality assessment of JPEG compressed images. *IEEE International conference on Image Processing,* 2002
- **M. PINSON.** A new standardized method for objectively measuring video quality. *IEEE Transactions on broadcasting,* 2004, vol. 50 (3), 312-322

- **Z. WANG ; L. LU ; A.C. BOVIK.** Image quality assessment: From error visibility to structural similarity. *IEEE Transactions on Image Processing,* 2004, vol. 13 (4), 600-612